# EUROPEAN PATENT APPLICATION

(11) **EP 2 800 047 A2**
(43) Date of publication of application: **05.11.2014**
(21) Application number: 13186467.0
(22) Date of filing: 27.09.2013
(51) Int. Cl.: G06Q 30/02

(54) **System and method for booking an online advertising campaign**

(30) Priority: 29.04.2013 US 201313872436
(71) Applicant: Yahoo! Inc., Sunnyvale, CA 94089 (US)
(72) Inventor: Torres, Enrique A. Munoz, Sunnyvale, CA 94089 (US); Mayer, Marissa A, Sunnyvale, CA 94089 (US)
(74) Representative: Fennell, Gareth Charles

(57) **Abstract**

A system and method for booking an online advertising campaign simplifies a process of onboarding an advertiser to a new online advertising product. An offer message for an advertising campaign is communicated from an online service provider to an advertiser. The offer message includes pre-generated advertising creative information for the advertising campaign, pricing information for the advertising campaign; and an initiation actuator selectable by the advertiser to accept the offer for the advertising campaign. If the offer is acceptable, the advertiser may simply click the initiation actuator to book the campaign. Matching offers and requests for an advertising campaign.

## Description

### TECHNICAL FIELD

This application relates generally to data processing systems. More particularly, this application relates to a system and method for booking an online advertising campaign.

### BACKGROUND

Online advertising has become increasingly popular as a way for advertisers to publicize information about goods and services to potential customers and clients. An advertiser can implement an advertising campaign using internet-accessible facilities of online providers such as Yahoo! Inc. The online provider serves to connect the advertiser with users accessing online resources such as search engines and news and information sites. Advertisements ("ads") of the advertiser are provided to the users to inform and attract the attention of the users.

The online provider makes available a variety of advertiser tools to create and manage an advertising campaign. The advertiser may make use of these tools by accessing web sites of the online provider. Tools for creating an advertising campaign allow the advertiser to specify such parameters as an ad budget, ad timing, and target audience. Such tools also allow the advertiser to create and specify the advertising creatives to be used in online advertisements and in accordance with ad formatting rules and requirements. Advertising creatives are graphics, text, sound and video that are developed to attract the attention of an audience. Other advertiser tools allow the advertiser to manage a campaign by viewing statistics about the progress and success of the campaign and to vary the parameters and details of the campaign as it progresses.

It is desirable for the online provider to provide advertiser tools which are easy to use and produce desirable results for the advertiser. For the online provider, advertiser tools can operate to further engage advertisers for their mutual benefit. Further limitations and disadvantages of conventional and traditional approaches will become apparent to one of skill in the art, through comparison of such systems with some aspects of the disclosure set forth in the remainder of the present application with reference to the drawings.

### SUMMARY

In accordance with the systems, products and methods disclosed here, an advertising campaign may be initiated by an advertiser with a single click on a web page or electronic mail message. The disclosed system initiates a campaign offer by proactively and automatically transforming advertising creatives taken from existing campaigns into a proposal to a prospective advertiser. The proposal is arranged in a format that is customized for a particular new advertising product and for the particular prospective advertiser. The end result of this transformation is a ready-to-go advertising campaign, which can be provided in an offer to an advertiser. The offer may be made, for example, by email. The advertiser then can choose to accept the offer or instead make modifications. Upon acceptance, for example, after clicking a link in the email, information is communicated back to the disclosed system. In response to the information, the system books the campaign for the advertiser.

One aspect of the present application provides a method comprising: in a server system, selecting advertising creatives from a database of advertising creatives; formatting an offer message with the selected advertising creatives, an offer for an advertising campaign from an online service provider to an advertiser, and an offer acceptance actuator; communicating the message from a server system to a device of an advertiser, receiving an offer acceptance message indicative of selection of the offer acceptance actuator by the advertiser; and booking the advertising campaign. Advantageously, a method is provided by the online service provider which enables an advertiser to accept or book a new online advertising campaign in a simplified manner. The method also enables the process of onboarding an advertiser to a new online advertising platform to be simplified or made more efficient.

Another aspect of the present application provides a system comprising: a storage device to store data defining a plurality of pre-generated advertising creatives; and a server system in data communication with the storage device and configured to communicate a communication to a data processing device of an advertiser over a network, the communication including data defining one or more selected pre-generated advertising creatives, an offer to the advertiser of an online advertising campaign, and an offer acceptance actuator which is selectable by the advertiser upon receipt of the communication at the data processing device of the advertiser to accept the offer. Advantageously, a system is provided which enables the accepting or booking of a new online advertising campaign for an advertiser to be simplified. The system also enables the process of onboarding an advertiser to a new online advertising platform to be simplified or made more efficient.

Another aspect of the present application provides a product comprising: an offer for an advertising campaign from an online service provider to an advertiser; pre-generated advertising creative information for the advertising campaign; pricing information for the advertising campaign; and an initiation actuator selectable by the advertiser to accept the offer for the advertising campaign. Advantageously, a product is provided by the online service provider which enables the accepting or booking of a new online advertising campaign for an advertiser to be simplified. The product also enables the process of onboarding an advertiser to a new online advertising platform to be simplified or made more efficient.

These and other advantages, aspects, and novel features of the present invention, as well as details of illustrated embodiments thereof, will be more fully understood from the following description and drawings.

### BRIEF DESCRIPTION OF THE DRAWINGS

FIG. 1 is a block diagram of an example online information system;

FIG. 2 is an example illustrating a display ad as modified for display in a stream display;

FIG. 3 is an example illustrating a search ad as modified for display in a stream display;

FIG. 4 is a flow diagram illustrating an example embodiment of a method for onboarding an advertiser to a new advertising campaign;

FIG. 5A and FIG. 5B illustrate an example offer message that may be communicated to a prospective advertiser offering an advertising campaign;

FIG. 6 illustrates an example web page useable for modifying a proposed advertising campaign by an advertiser; and

FIG. 7 illustrates a second example web page useable by an advertiser for modifying a proposed advertising campaign.

### DETAILED DESCRIPTION

Subject matter will now be described more fully hereinafter with reference to the accompanying drawings, which form a part hereof, and which show, by way of illustration, specific example embodiments. Subject matter may, however, be embodied in a variety of different forms and, therefore, covered or claimed subject matter is intended to be construed as not being limited to any example embodiments set forth herein; example embodiments are provided merely to be illustrative. Likewise, a reasonably broad scope for claimed or covered subject matter is intended. Among other things, for example, subject matter may be embodied as methods, devices, components, or systems. The following detailed description is, therefore, not intended to be limiting on the scope of what is claimed.

Throughout the specification and claims, terms may have nuanced meanings suggested or implied in context beyond an explicitly stated meaning. Likewise, the phrase "in one embodiment" as used herein does not necessarily refer to the same embodiment and the phrase "in another embodiment" as used herein does not necessarily refer to a different embodiment. It is intended, for example, that claimed subject matter includes combinations of example embodiments in whole or in part.

In general, terminology may be understood at least in part from usage in context. For example, terms, such as "and", "or", or "and/or," as used herein may include a variety of meanings that may depend at least in part upon the context in which such terms are used. Typically, "or" if used to associate a list, such as A, B or C, is intended to mean A, B, and C, here used in the inclusive sense, as well as A, B or C, here used in the exclusive sense. In addition, the term "one or more" as used herein, depending at least in part upon context, may be used to describe any feature, structure, or characteristic in a singular sense or may be used to describe combinations of features, structures or characteristics in a plural sense. Similarly, terms, such as "a," "an," or "the," again, may be understood to convey a singular usage or to convey a plural usage, depending at least in part upon context. In addition, the term "based on" may be understood as not necessarily intended to convey an exclusive set of factors and may, instead, allow for existence of additional factors not necessarily expressly described, again, depending at least in part on context.

An online information system places advertisements of advertisers within content services made available to end users, such as web pages, mobile applications ("apps"), TV apps, or other audio or visual content services. The advertisements are provided along with other content. The other content may include any combination of text, graphics, audio, video, or links to such content. The advertisements are conventionally selected based on a variety of criteria including those specified by the advertiser. The advertiser conventionally defines an advertising campaign to control how and when advertisements are made available to users and to specify the content of those advertisements. The content of the advertisements themselves is sometimes referred to as advertising creative or advertising creatives.

Initiating an advertising campaign conventionally has required a substantial commitment and engagement from an advertiser. This has been especially true for new advertisers who have not previously advertised through the online provider. It has also been true when the online provider makes available to advertisers a new advertising product which is unknown or unfamiliar to the advertisers. Engaging the advertiser to begin advertising or to adopt the new product can be a challenge for the online provider.

Prospective advertisers need to go through several steps before they can advertise with a new online provider or on a new online product. First, the advertisers need to understand the product and envision how their advertisements would appear to a user in the context of the product. Second, the advertisers need to understand in detail any constraints of the underlying advertisement formats. Third, assuming the advertisers decide to engage the online provider, the advertisers need to develop product-specific campaigns that satisfy the constraints of particular content services.

These steps can involve a substantial time commitment on the part of the prospective advertiser. Understanding the advertising product can take time, even with the assistance of account managers and advertiser tools and information. Deciding how to communicate an advertising message, within the format provided by the advertising product, can take time. This is especially true if the prospective advertiser is not experienced in creating advertising campaigns. A prospective advertiser who is experienced running other aspects of a business may not have the skill or expertise to develop and evaluate an advertising campaign.

Further, the prospective advertiser may be unable to reliably judge the likely effectiveness of a campaign. This is especially true in the case of a new advertising product with an unproven return on investment. Given the uncertainty and the time commitment involved, the advertiser may question the value of investing in development of advertising creatives and other inputs for an advertising campaign.

From the perspective of the online provider, prospective advertisers that are slow to adopt a new product can cause the new products to ramp up slowly. Most advertising products monetize better and provide a better end-user experience when there are more engaged advertisers. Accordingly, there are benefits to the online provider in having more advertisers adopt the product and develop early experience with it. Developing mechanisms to increase adoption rate of new products by advertisers is a challenge for the online provider.

Conventionally, online providers have met this challenge with three strategies. First, they have emphasized educating prospective advertisers on the new advertising product. This has been done, for example, through help content available online and through human interaction by sales representatives. Second, they have designed user interfaces which are easy for advertisers to access and use. Third, to allay concerns about unproven products with uncertain returns on investment, they have offered credits or promotional pricing to prospects who adopt the new product early.

While these approaches are helpful, they do not change the fact that many advertisers need a significant level of engagement before developing the confidence to initiate a new campaign. Even when offered credits or promotional pricing, some advertisers will choose not to make the investment of time and energy necessary to understand a new product and assemble creatives for use in a new campaign.

A new approach has been developed to simplify the process of onboarding advertisers for new products. Onboarding includes engaging an advertiser with a particular advertising product or products, developing an advertising campaign, selecting creatives and establishing parameters such as pricing, budget, and timing. Onboarding may also include booking the advertising campaign by initiating appropriate records in an account database and beginning to serve advertisements with an ad server.

Rather than focusing solely on making it simpler for prospective advertiser to develop their own advertising creatives, the new approach proactively and automatically transforms information including advertising creatives taken from existing campaigns into a proposal that is suitable for a particular new advertising product and for a particular prospective advertiser. The end product of this transformation is a ready-to-go advertising campaign that can be automatically proposed to an advertiser. The advertisers then can choose to accept the proposed campaign as proposed or instead make modifications.

One particular aspect of this new approach involves changing search creatives into creatives that are suitable for a stream advertising product. Stream ads are designed to be displayed in a stream of content in which a sequence of items are displayed, one item after another, for example, down a web page viewed on a computer display or other device. Stream ads may be inserted into the stream of content, supplementing the sequence of related items. Stream ads may be formatted to visually match the surrounding stream of content so as to appear native to the stream. Alternatively, stream ads may be formatted to complement the surrounding stream of content so as to be more eye-catching.

Streams are becoming common in online presentation because they provide added flexibility. If a stream is not used to present data on a web page, the web page must have pre-defined sections. Only certain types of information, having specified sizes, shapes or content, can be presented in the pre-defined sections. A stream allows any number and size and shape of content to be included. The elements of the stream may be sorted by relevance or by any suitable parameter. A stream also lowers the cognitive load on the viewer when viewing content and advertisements on a web page.

Stream ads are not generally keyword based and generally require creatives that cater to broader audiences. A keyword-based advertisement includes a keyword which is directed to a particular segment of the audience. An advertiser may pay for a keyword-based ad by paying a cost per click (CPC) amount whenever the ad is selected or clicked on by a user viewing the ad on a display screen. Or the advertiser may pay for the ad per impression (CPM) whenever the ad is viewed by the user.

One aspect of the new approach involves looking at all online ads from a particular advertiser and algorithmically selecting those that had the broadest reach or the highest interest level or the broadest segment of the audience for the ad. This feature allows significant narrowing down of the pool of potential creatives that can be part of a proposal. Using the selected creatives, an advertising campaign proposal is automatically generated. The resulting proposal can be sent to an advertiser as-is, can be further refined through additional heuristics, or manually adjusted by an account manager before presentation to an advertiser.

After developing a set of advertiser-specific creatives that are suitable for the new product, the new approach may involve sending a communication such as an electronic mail ("email") message to the advertiser. The message, for example, includes text that explains the product, shows how a creative looks like within the context of the content service or services associated with the new product, and may provide some or all of the creatives that are proposed for a new campaign. From that email, the advertiser can choose to accept the campaign immediately or can make changes to the proposed campaign. Acceptance can be signaled, for example, by the advertiser replying affirmatively to the email or by clicking on a button or other actuator in the email. The acceptance, when received by the online provider, acts to book the campaign. Changes can be made to the proposed campaign by directly interacting with a web site of the online provider, for example, using an advertiser user interface that is pre-loaded with the proposed campaign. Also, changes can be made by engaging with an account representative. Of course, advertisers can also create campaigns from scratch, either as a replacement or in addition to the proposed campaign.

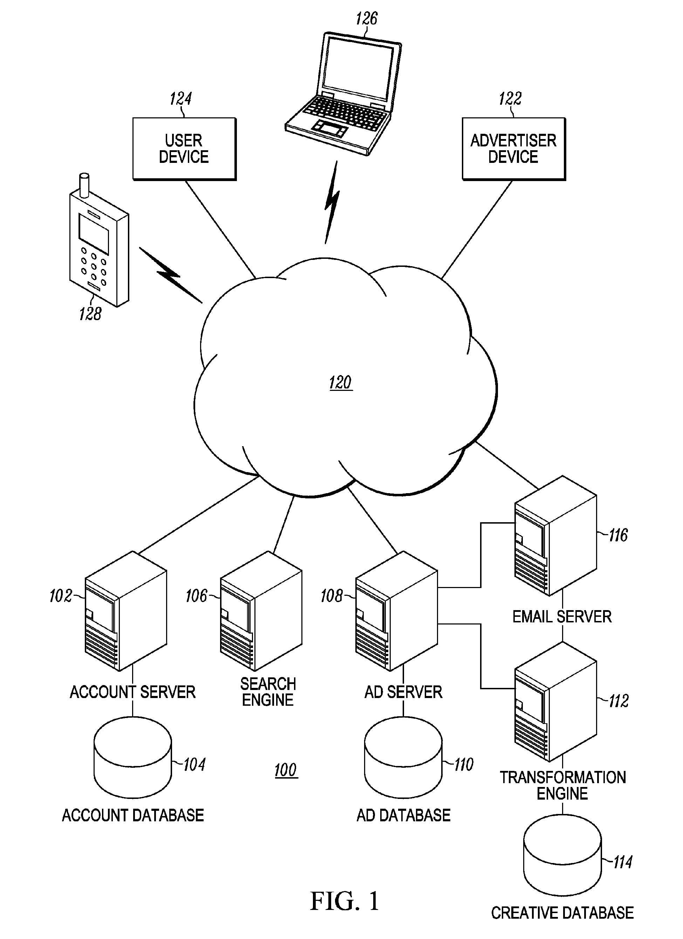

FIG. 1 is a block diagram of online information system 100. The online information system 100 in the example embodiment of FIG. 1 includes an account server 102, and account database 104, a search engine 106, an advertisement (ad) server 108, an ad database 110, a transformation engine 112, a creative database 114 and an email server 116. The online information system 100 may be accessible over a network 120 by one or more advertiser devices such as advertiser device 122 and by one or more user devices such as user device 124. In various examples of such an online information system, users may search for and obtain content from sources over the network 120. Advertisers may provide advertisements for placement on web pages and other communications sent over the network to user devices such as the user device 124. The online information system in one example is deployed and operated by an online provider such as Yahoo! Inc.

The account server 102 stores account information for advertisers. The account server 102 is in data communication with the account database 104. Account information may include one or more database records associated with each respective advertiser. Any suitable information may be stored, maintained, updated and read from the account database 104 by the account management server 102. Examples include advertiser identification information, advertiser security information such as passwords and other security credentials, and account balance information. In some embodiments, an online provider which manages the online information system 100 may assign one or more account managers to a respective advertiser, and information about the one or more account managers may be maintained in the account database 104 as well as information obtained and recorded for subsequent access by an account manager.

The account server 102 may be implemented using any suitable device. The account management server 102 may be implemented as a single server, a plurality of servers, or any other type of computing device known in the art. Preferably, access to the account server 102 is accomplished through a firewall, not shown, which protects the account management programs and the account information from external tampering. Additional security may be provided via enhancements to the standard communications protocols such as Secure HTTP or the Secure Sockets Layer.

The account server 102 may provide an advertiser front end to simplify the process of accessing the account information of an advertiser. The advertiser front end may be a program, application or software routine that forms a user interface. In one particular embodiment, the advertiser front end is accessible as a web site with one or more web pages that an accessing advertiser may view on an advertiser device such as advertiser device 122. The advertiser may view and edit account data using the advertiser front end. After editing the advertising data, the account data may then be saved to the account database 104.

The search engine 106 may be a computer system, one or more servers, or any other computing device known in the art. Alternatively, the search engine 106 may be a computer program, instructions, or software code stored on a computer-readable storage medium that runs on a processor of a single server, a plurality of servers, or any other type of computing device known in the art. The search engine 106 may be accessed, for example, by user devices such as the user device 124 operated by a user over the network 120. The user device 124 communicates a user query to the search engine 106. The search engine 106 locates matching information using any suitable protocol or algorithm and returns information to the user device 124. The search engine 106 may be designed to help users find information located on the Internet or an intranet. In a particular example, the search engine 106 may also provide to the user device 124 over the network 120 a web page with content including search results, information matching the context of a user inquiry, links to other network destinations or information and files of information of interest to a user operating the user device 124.

The search engine 106 may enable a device, such as the user device 124 or any other client device, to search for files of interest using a search query. Typically, the search engine 106 may be accessed by a client device via one or more servers or directly over the network 120. The search engine 106 may, for example, in one illustrative embodiment, comprise a crawler component, an indexer component, an index storage component, a search component, a ranking component, a cache, a profile storage component, a logon component, a profile builder, and one or more application program interfaces (APIs). The search engine 106 may be deployed in a distributed manner, such as via a set of distributed servers, for example. Components may be duplicated within a network, such as for redundancy or better access.

The ad server 108 operates to serve advertisements to user devices such as the user device 124. Advertisements include data defining advertisement information that may be of interest to a user of a user device. An advertisement may include text data, graphic data, image data, video data, or audio data. An advertisement may further include data defining one or more links to other network resources providing such data. The other locations may be other locations on the internet, other locations on an intranet operated by the advertiser, or any access.

For online information providers, advertisements may be displayed on web pages resulting from a user-defined search based at least in part upon one or more search terms. Advertising may be beneficial to users, advertisers or web portals if displayed advertisements are relevant to interests of one or more users. Thus, a variety of techniques have been developed to infer user interest, user intent or to subsequently target relevant advertising to users.

One approach to presenting targeted advertisements includes employing demographic characteristics (e.g., age, income, sex, occupation, etc.) for predicting user behavior, such as by group. Advertisements may be presented to users in a targeted audience based at least in part upon predicted user behavior.

Another approach includes profile-type ad targeting. In this approach, user profiles specific to a user may be generated to model user behavior, for example, by tracking a user's path through a web site or network of sites, and compiling a profile based at least in part on pages or advertisements ultimately delivered. A correlation may be identified, such as for user purchases, for example. An identified correlation may be used to target potential purchasers by targeting content or advertisements to particular users.

Yet another approach includes targeting based on content of a web page requested by a user. Advertisements may be placed on a web page or in association with other content that is related to the subject of the advertisements. The relationship between the content and the advertisement may be determined in any suitable manner. The overall theme of a particular web page may be ascertained, for example, by analyzing the content presented therein. Moreover, techniques have been developed for displaying advertisements geared to the particular section of the article currently being viewed by the user. Accordingly, an advertisement may be selected by matching keywords/and or phrases within the advertisement and the web page.

The ad server 108 includes logic and data operative to format the advertisement data for communication to the user device. The ad server 108 is in data communication with the ad database 110. The ad database 110 stores information including data defining advertisements to be served to user devices. This advertisement data may be stored in the ad database 110 by another data processing device or by an advertiser.

Further, the ad server 108 is in data communication with the network 120. The ad server 108 communicates ad data and other information to devices over the network 120. This information may include advertisement data communicated to a user device. This information may also include advertisement data and other information communicated with an advertiser device such as the advertiser device 122. An advertiser operating an advertiser device may access the ad server 108 over the network to access information including advertisement data. This access may include developing advertisement creatives, editing advertisement data, deleting advertisement data and other activities.

The ad server 108 may provide an advertiser front end to simplify the process of accessing the advertising data of an advertiser. The advertiser front end may be a program, application or software routine that forms a user interface. In one particular embodiment, the advertiser front end is accessible as a web site with one or more web pages that an accessing advertiser may view on the advertiser device. The advertiser may view and edit advertising data using the advertiser front end. After editing the advertising data, the advertising data may then be saved to the ad database 110 for subsequent communication in advertisements to a user device.

The advertisement server 108 may be a computer system, one or more servers, or any other computing device known in the art. Alternatively, the advertisement server 108 may be a computer program, instructions and/or software code stored on a computer-readable storage medium that runs on a processor of a single server, a plurality of servers, or any other type of computing device known in the art.

The transformation engine 112 is in data communication with the creative database 114, the ad server 108 and the email server 116. The transformation engine 112 selects one or more advertising creatives from the creative database 114 and transforms the data defining the advertising creatives to a new, predefined format. The transformed creatives may be stored by the transformation engine 112 in any suitable memory or storage device, including the creative database 114. The transformed creatives may be referred to as pre-generated advertising creatives or pre-generated advertising creative information. The pre-generated advertising creatives are generated automatically by the transformation engine or another data processing device, using as input existing advertising creatives.

The transformation engine 112 then provides the transformed advertising creatives to other network devices such as the advertising server 108 and the email server 116. Operation of the transformation engine 112 will be described in greater detail below.

The account server 102, the search engine 106, the ad server 108, the transformation engine 112 and the email server 114 may be implemented as any suitable computing device. A computing device may be capable of sending or receiving signals, such as via a wired or wireless network, or may be capable of processing or storing signals, such as in memory as physical memory states, and may, therefore, operate as a server. Thus, devices capable of operating as a server may include, as examples, dedicated rack-mounted servers, desktop computers, laptop computers, set top boxes, integrated devices combining various features, such as two or more features of the foregoing devices, or the like.

Servers may vary widely in configuration or capabilities, but generally a server may include one or more central processing units and memory. A server may also include one or more mass storage devices, one or more power supplies, one or more wired or wireless network interfaces, one or more input/output interfaces, or one or more operating systems, such as Windows Server, Mac OS X, Unix, Linux, FreeBSD, or the like.

The account server 102, the search engine 106, the ad server 108, the transformation engine 112 and the email server 114 may be implemented as content servers or may be in communication with content servers. A content server may include a device that includes a configuration to provide content via a network to another device. A content server may, for example, host a site, such as a social networking site, examples of which may include, without limitation, Flicker, Twitter, Facebook, Linkedln, or a personal user site (such as a blog, vlog, online dating site, etc.). A content server may also host a variety of other sites, including, but not limited to business sites, educational sites, dictionary sites, encyclopedia sites, wikis, financial sites, government sites, etc.

A content server may further provide a variety of services that include, but are not limited to, web services, third-party services, audio services, video services, email services, instant messaging (IM) services, SMS services, MMS services, FTP services, voice over IP (VOIP) services, calendaring services, photo services, or the like. Examples of content may include text, images, audio, video, or the like, which may be processed in the form of physical signals, such as electrical signals, for example, or may be stored in memory, as physical states, for example. Examples of devices that may operate as a content server include desktop computers, multiprocessor systems, microprocessor-type or programmable consumer electronics, etc. The content servers may not be under common ownership or control with the ad server or servers.

The network 120 may include any data communication network or combination of networks. A network may couple devices so that communications may be exchanged, such as between a server and a client device or other types of devices, including between wireless devices coupled via a wireless network, for example. A network may also include mass storage, such as network attached storage (NAS), a storage area network (SAN), or other forms of computer or machine readable media, for example. A network may include the Internet, one or more local area networks (LANs), one or more wide area networks (WANs), wire-line type connections, wireless type connections, or any combination thereof. Likewise, sub-networks, such as may employ differing architectures or may be compliant or compatible with differing protocols, may interoperate within a larger network such as the network 120. Various types of devices may, for example, be made available to provide an interoperable capability for differing architectures or protocols. As one illustrative example, a router may provide a link between otherwise separate and independent LANs. A communication link or channel may include, for example, analog telephone lines, such as a twisted wire pair, a coaxial cable, full or fractional digital lines including T1, T2, T3, or T4 type lines, Integrated Services Digital Networks (ISDNs), Digital Subscriber Lines (DSLs), wireless links including satellite links, or other communication links or channels, such as may be known to those skilled in the art. Furthermore, a computing device or other related electronic devices may be remotely coupled to a network, such as via a telephone line or link, for example.

The advertiser device 122 includes any data processing device which may access the online information system 100 over the network 120. The advertiser device 122 is operative to interact over the network 120 with the account server 102, the search engine 106, the ad server 108, the email server 116, content servers and other data processing systems. The advertiser device 122 may, for example, implement a web browser for viewing web pages and submitting user requests. The advertiser device 122 may communicate data to the online information system 100, including data defining web pages and other information. The advertiser device 122 may receive communications from the online information system 100, including data defining web pages and advertising creatives. The advertiser device 122 may also receive electronic mail messages from the email server 116 and may interact with data of the email message to send a communication in return to the online information system. In one particular example, an email message from the email server includes a selectable actuator or button that may be clicked by an advertiser operating the advertiser device. Clicking the button causes the advertiser device 122 to communicate a message to the online information server. The message may be an email message, a web page or any other communication.

The user device 124 includes any data processing device which may access the online information system 100 over the network 120. The user device 124 is operative to interact over the network 120 with the search engine 106. The user device 124 may, for example, implement a web browser for viewing web pages and submitting user requests. A user operating the user device 124 may enter a search request and communicate the search request to the online information system 100. The search request is processed by the search engine and search results are returned to the user device 124. In other examples, a user of the user device 124 may request data such as a page of information from the online information processing system 100. The data instead may be provided in another environment such as a native mobile application, TV application, or an audio application. The online information processing system 100 may provide the data or re-direct the browser to another web site. In addition, the ad server may select advertisements from the ad database 110 and include data defining the advertisements in the provided data to the user device 124.

The advertiser device 122 and the user device 124 operate as a client device when accessing information on the online information system. A client device such as the advertiser device 122 and the user device 124 may include a computing device capable of sending or receiving signals, such as via a wired or a wireless network. A client device may, for example, include a desktop computer or a portable device, such as a cellular telephone, a smart phone, a display pager, a radio frequency (RF) device, an infrared (IR) device, a Personal Digital Assistant (PDA), a handheld computer, a tablet computer, a laptop computer, a set top box, a wearable computer, an integrated device combining various features, such as features of the forgoing devices, or the like. In the example of FIG. 1, a laptop computer 126 and a smartphone 128 may be operated interchangeably as an advertiser device or as a user device.

A client device may vary in terms of capabilities or features. Claimed subject matter is intended to cover a wide range of potential variations. For example, a cell phone may include a numeric keypad or a display of limited functionality, such as a monochrome liquid crystal display (LCD) for displaying text. In contrast, however, as another example, a web-enabled client device may include one or more physical or virtual keyboards, mass storage, one or more accelerometers, one or more gyroscopes, global positioning system (GPS) or other location-identifying type capability, or a display with a high degree of functionality, such as a touch-sensitive color 2D or 3D display, for example. A client device such as the advertiser device 122 and the user device 124 may include or may execute a variety of operating systems, including a personal computer operating system, such as a Windows, iOS or Linux, or a mobile operating system, such as iOS, Android, or Windows Mobile, or the like. A client device may include or may execute a variety of possible applications, such as a client software application enabling communication with other devices, such as communicating one or more messages, such as via email, short message service (SMS), or multimedia message service (MMS), including via a network, such as a social network, including, for example, Facebook, Linkedln, Twitter, Flickr, or Google+, to provide only a few possible examples. A client device may also include or execute an application to communicate content, such as, for example, textual content, multimedia content, or the like. A client device may also include or execute an application to perform a variety of possible tasks, such as browsing, searching, playing various forms of content, including locally stored or streamed video, or games. The foregoing is provided to illustrate that claimed subject matter is intended to include a wide range of possible features or capabilities.

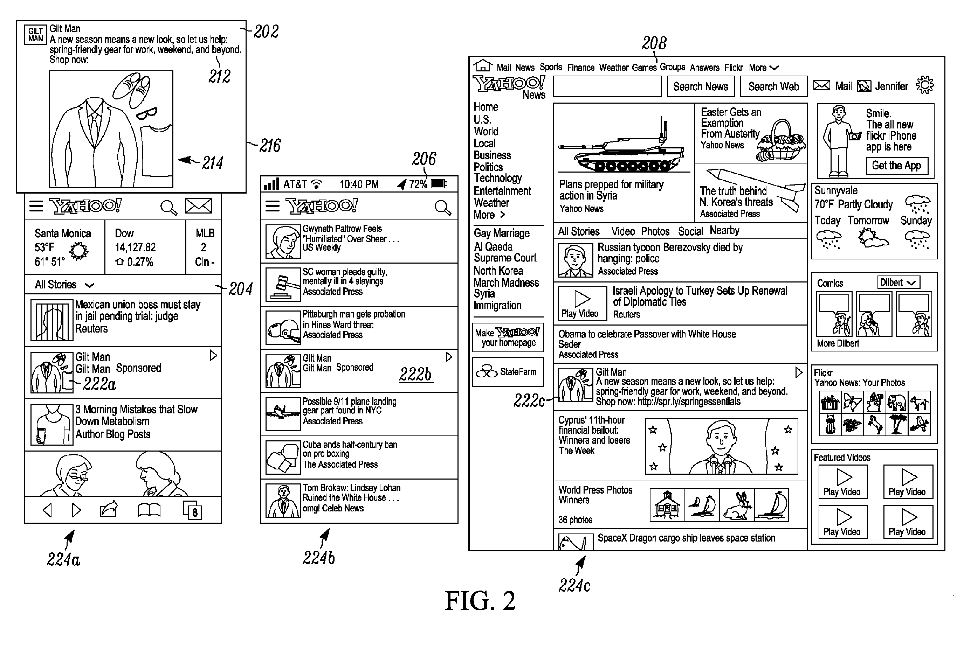

FIG. 2 is an example illustrating a display ad 202 as modified for display in a stream display. The display ad 202 includes text 212, graphic images 214 and a defined boundary 216. The display ad 202 is developed by an advertiser for placement on a web page sent to a user device operated by a user. The display ad 202 may be placed in a wide variety of locations on the web page. However, the defined boundary 216 and the shape of the display ad must be matched to a space available on a web page. If the space available has the wrong shape or size, the display ad 202 may not be useable.

FIG. 2 also shows examples of the display ad 202 as displayed on a mobile web device display 204, on a mobile application display 206 and on a personal computer display 208. The mobile web device display 204 may be shown on the display screen of a mobile handheld device such as a smartphone. The mobile application display 206 may be shown on the display screen of a portable device such as a tablet computer. The personal computer display 208 may be displayed on the display screen of a personal computer (PC).

In these examples, the display ad is shown as a part of stream displays 224a, 224b, and 224c. The stream displays 224 includes a stream of content in which a sequence of items are displayed, one item after another, for example, down a web page viewed on the mobile web device display 204, the mobile application display 206 and the personal computer display 208. The stream of content may include any type of content, including news items, business-related items, sports-related items, etc. Further, in addition to textual or graphical content, the stream of content may include other data as well, such as audio and video data or applications. Each item may include text, graphics, other data, and a link to additional information. Clicking or otherwise selecting the link re-directs the browser on the user's device to a web page with the additional information. Stream ads like the stream ad 222a, 222b, and 222c may be inserted into the stream of content, supplementing the sequence of related items, providing a more seamless experience for end users.

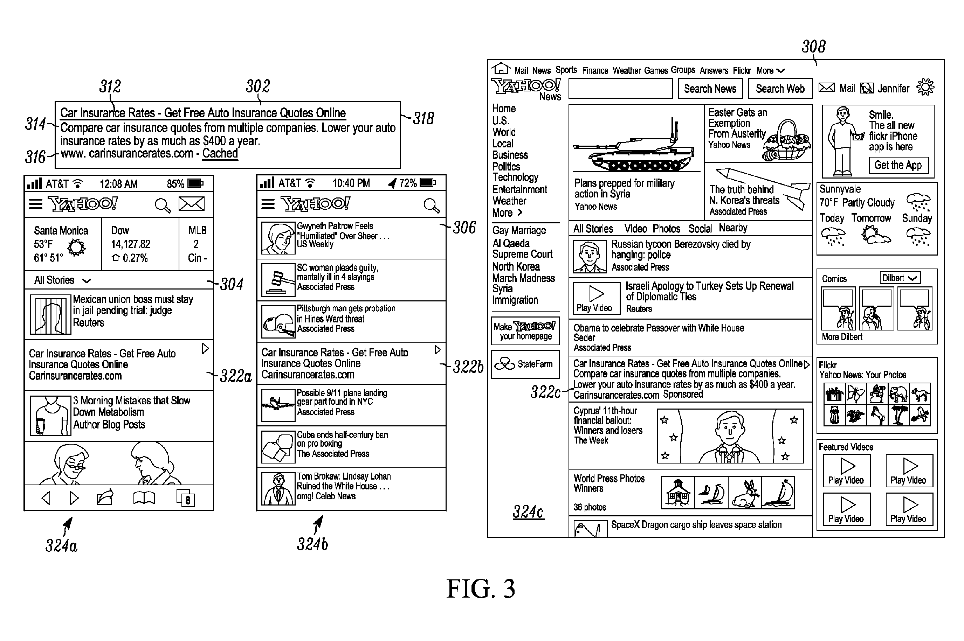

FIG. 3 is an example illustrating a search ad 302 as modified for display in a stream display. The search ad 302 includes a title 312, text 314, a landing URL 316 and a defined boundary 318. The search ad 302 is developed by an advertiser for placement on a web page sent to a user device operated by a user. The search ad 302 may be placed in a wide variety of locations on the web page. However, the defined boundary 316 and the shape of the search ad 302 must be matched to a space available on a web page. If the space available has the wrong shape or size, the search ad 302 may not be useable.

The title 312 of the search ad 302 is conventionally a clickable link. Upon selection by a user, for example, by clicking the link, the browser of the device on which the search ad 302 is displayed is re-directed to the URL 316 or other URL. The search ad 302 operates to steer possible customers or clients to the web site of the advertiser.

The creative of the ad, including the text 314 of the search ad 302, is worded to catch the attention of a viewer. Typically, an advertiser will maintain a large number of search ads such as the search ad 302. The title 312, the text 314 or the URL 316 or other ad features not illustrated in FIG. 3 may be tailored to a variety of different audiences. By tailoring the content of the ad in this manner, search ads can be very specific in their targeting. Specific targeting suggests that an advertiser may use a campaign with a very large number of search ads, each ad focused on a particular target audience.

FIG. 3 also shows examples of the search ad 302 as displayed on a mobile web device display 304, on a mobile application display 306 and on a personal computer display 308. The mobile web device display 304 may be shown on the display screen of a mobile handheld device such as a smartphone. The mobile application display 306 may be shown on the display screen of a portable device such as a tablet computer. The personal computer display 308 may be displayed on the display screen of a personal computer (PC).

In these examples, the search ad 302 is shown as a part of stream displays 324a, 324b, and 324c. The stream displays 324 includes a stream of content in which a sequence of items are displayed in list form, one item after another, for example, down a web page viewed on the mobile web device display 304, the mobile application display 306 and the personal computer display 308. Stream ads like the stream ads 322a, 322b, and 322c may be inserted into the stream of content, supplementing the sequence of related items.

In some instances, advertisers have a large inventory of display ads such as the display ad 202 (FIG. 2) and a large inventory of search ads such as the search ad 302 (FIG. 3). More particularly, the advertisers have a large inventory of advertising creatives for use in display ads and search ads. Advertising creatives are graphics, text, sound and video that are developed to attract the attention of an audience. The inventory of display ads and search ads and creatives for those ads may serve as a source of creatives for stream ads.

In accordance with one embodiment, the display ad 202 and the search ad 302 may be transformed by a device such as the transformation engine 112 (FIG. 1) to a stream ad 222. Advertising creatives for the display ads of an advertiser and for search ads of the advertiser may be stored in a location such as the creative database 114 of FIG. 1. The transformation engine 112 selects one or more advertising creatives from the creative database 114 and transforms the data defining the advertising creatives to a new, predefined format.

Transformation may involve several steps. In a first step, the existing creatives of an advertiser are filtered to produce a reduced number of candidate creatives. Filtering may be done on any suitable criteria. For example, as noted above, an advertiser may have a large inventory of display ads and search ads. Further as noted, the search ads tend to have a very narrow focus. It has been found that more broadly focused stream ads are more effective when placed in a stream with other content. One technique for filtering involves selecting the top few creatives of the advertiser by volume. The creatives which have been most used by the advertiser will be most likely to cause the advertiser to adopt the new advertising product. In other embodiments, other filtering techniques may be used including A/B testing across a large number of creatives. In A/B testing, a first ad creative is displayed to a sample of viewers and its performance is monitored. A second ad creative, modified relative to the first ad creative, is displayed to a second sample of viewers and its performance is monitored. The two monitored ad performances are then compared to determine which ad creative is more productive or successful at achieving business goals of the advertiser or the online service provider.

In a second step, the transformation engine 112 changes ad format. Advertising creatives may be formatted for provision on any content service available on any platform, including for example the mobile web device display 204, the mobile application display 206, the personal computer display 208 of FIG. 2 as well as the mobile web device display 304, the mobile application display 306 and the personal computer display 308 of FIG. 3. Other content services may be associated with other platforms. Formatting rules for each target platform are retrieved and used for reformatting the advertising creatives. For example, in FIG. 2, stream ad 222a has been formatted according to formatting rules appropriate for the mobile web device display 204. Further, stream ad 222b has been formatted according to formatting rules appropriate for the mobile application display 206. Still further, stream ad 222c has been formatted according to formatting rules appropriate for the personal computer display 208. In similar manner, in FIG. 3, the stream ad 322a has been formatted according to formatting rules appropriate for the mobile web display device 304, the stream ad 322b has been formatted according to formatting rules appropriate for the mobile application display 306 and the stream ad 322c has been formatted according to formatting rules appropriate for the personal computer display 308. This technique may be extended to other types of display devices.

As part of the transformation process, any shape data for an existing display ad or search ad may be removed and the creative is re-sized to the size and shape of the stream ad for the particular platform. Stream ads may be formatted to visually match the surrounding stream of content so as to appear native to the stream. Alternatively, stream ads may be formatted to complement the surrounding stream of content so as to be more eye-catching. In some embodiments, the extent to which the stream ads produced by the transformation engine match the surrounding stream content may be varied based on selected criteria. For example, in some cases, it may be desirable to have stream ads which closely match visually the surrounding stream content in terms of size, color and relative positioning of text, graphics and other content. A relatively harmonious match may be less visually jarring to the viewer of the content and stream ads, which may be more desirable. In some cases, it may be desirable to have the stream ads have a slightly different appearance such as a different color or shaded background behind the text or graphics, so that the stream ad is clearly but subtly distinguishable from the stream content. In yet other cases, it may be desirable to have the appearance of the stream ad vary quite dramatically from the stream contend, such as with different text font or text size, differing arrangement of text and graphics, different size of the stream ad relative to the size of content items, etc. A very different appearing stream ad will stand out dramatically from the content and be highly visible to a view, which may be desirable in preparing an advertising offer for a prospective advertiser.

The transformation engine 112 may further apply changes to the substantive content of the existing creatives. For example, existing creatives may include a variety of data fields. Example of such data fields are a title, a description, an image, a URL, and other attribute fields. The title of an existing display ad or other existing creative is generally brief and may be displayed in a larger, more prominent text font than other text in existing ad. The description, in contrast, may be longer with more words and concepts in the text and may be displayed in a slightly smaller text font, or in a different color text font. Some existing ads, such as search ads, frequently do not have any image but are textual only.

The stream ads produced by the transformation may be produced by using the pre-existing data fields of the pre-existing creatives. For example, the stream ads may be formatted with a title based on or identical to the title of the pre-existing ad which is the basis for the stream ad. Similarly, the description text of the stream ad may be the same or modified from the text of the original search ad or display ad. If the original ad did not have a graphical component, such as a search ad, the transformation engine may select an appropriate graphical component from another ad which does have a graphical component. The graphical component can be cropped, resized, or otherwise re-purposed. This may be done, for example, by automatically comparing other components of the original ad which has no graphical component and other ads which do have graphical components to identify an ad with a graphical component with similar content. If the title and description of the two ads are algorithmically similar using some selected criteria, the graphic from a similar ad may be matched with the title and description from an original ad to produce the stream ad with text and graphics.

In an embodiment, the transformation engine edits these attributes based on a set of rules adapted to the destination content service or services. In some embodiments, the title or description of the existing creative may be summarized algorithmically to accommodate the smaller format of content services provided on mobile platforms.

In some embodiments, the URL attributes are modified to accommodate performance tracking. For example, rather than incorporating in the stream ad a precisely defined URL that may be used by a search ad to track the source of a click through, a more general URL to a top-level advertiser web page may be used in the stream ad that is proposed to the advertiser. As will be discussed in greater detail below, the advertiser may be given the option to edit features of the ad, such as the landing page URL, before booking the ad campaign.

The transformation engine 112 then provides the transformed advertising creative to other network devices such as the advertising server 108 and the email server 116 of FIG. 1. The transformed creative may be stored, for example, in the ad database 110 of FIG. 1 for subsequent retrieval by the ad server 108.

In one embodiment, then, the transformation engine 112 includes a selection or filtering component and a formatting component. The selection or filtering component receives as input a relatively large number of pre-existing advertisements or ad creatives. These may be ads already associated with the prospective advertiser and stored in the creative database, for example. Or, these may be ads taken from another source, such as ads of the prospective advertiser existing on another online advertising system. The selection or filtering component may use any suitable criteria for reducing the number of advertisements from the original inventory of advertisements to a set of candidate advertisements. The set of candidate advertisements is relatively fewer in number the received pre-existing advertisements or creatives.

The formatting component processes the candidate advertisements to produce proposed advertisements. Formatting is done according to any suitable rules to conform the appearance and content of the proposed advertisements to a destination environment. In one particular example, the proposed advertisements are formatted by the formatting component to appear as stream ads with text and graphics selected to complement stream content as the stream content will appear on a specified user device.

In another embodiment, the transformation engine further includes a rules database. The rules database stores a set of transformation rules that may be applied to candidate creatives to produce proposed advertisements. The rules of the rules database define how data of the candidate creatives is processed to produce data that defines the proposed advertisements. The rules of the rules database define geometrical transformations, color requirements for text and background portions, graphics sizing and content, and other requirements that must be satisfied to produce the proposed advertisements. In some embodiments, where the transformation engine is configured to produce proposed advertisements for display on different platforms such as mobile devices, mobile applications on devices such as tablet computers and PC devices, the rules database may include rules for transformations for each platform. The rules database may be stored in memory in any suitable location or format.

The selection or filtering component and the formatting component of the transformation engine may be implemented in hardware, software or any combination of hardware and software. In the illustrated example of FIG 1, the hardware may be a data processing system configured as a server with access to a data network and storage such as the ad database. The software may be any routine, application, database, or data structure suitable for rapid and accurate processing of the data which form the advertisements being processed.

The transformation of advertising creatives to stream ads provides an opportunity to simplify the onboarding process for prospective advertisers or for advertisers who are offered a new advertising product. Onboarding an advertiser includes engaging the advertiser with a particular advertising product or products, developing an advertising campaign suitable for the advertiser and the advertiser's goods, services, and other products including data services, audio and video, selecting creatives and establishing parameters such as pricing, budget and timing for the advertisements. Onboarding may also include booking the advertising campaign by initiating appropriate records in an account database and beginning to serve advertisements with an ad server.

To simplify onboarding for an advertiser, stream ads may be developed from the advertiser's own pre-existing creatives. The transformation engine 112, as described above, produces stream ad creatives suitable for use in stream ads. The resulting stream ad creatives can form a portion of an advertising proposal to send electronically to the advertiser for rapid and easy review and acceptance. In some embodiments, the advertising offer may be accepted and booked with just a single click on the advertisement by the advertiser. This new technique drastically reduces the commitment of time and other resources by the advertiser for onboarding the advertiser to the new campaign.

In one embodiment, the transformation process is done a single time to develop an inventory of advertising creatives from a source such as the advertiser's stored search ads and display ads. Subsequently, the creatives for a current campaign or even for future campaigns are drawn from this inventory. In another embodiment, the process may be repeated or continuous. That is, periodically or with any other frequency, the transformation engine 112 may operate to transform existing advertising creative from designated sources into suitable creatives for the proposed campaign. This will have the benefit of ensuring that newly developed creatives of the advertiser form part of the source material for the transformation engine. In some embodiments, the occasional or continuous transformation of creatives may be done only with advertiser approval.

In another embodiment, a more precise search targeting technique may be used. Such a technique may be used for advertisers who have already bid on keywords for search ads or display ads. The keywords are used for targeting the placement of the advertiser's ads to a user's particular interest. In this technique, the online provider initially uses the advertiser's list of bidded keywords to create a search segment. The search segment is then used as the source of the advertising creatives that are the inputs to the transformation engine. The result is a native ad campaign that targets the search segment. Benefits of this technique include providing a proposed campaign to the advertiser that will be of the highest relevance. Since the proposed campaign is based on keywords the advertiser has already selected, the proposed campaign mirrors the particular advertising interest of the prospective advertiser. This will further improve the likelihood of the advertiser deciding to accept the proposed offer and book the campaign.

In still other embodiments, transformed advertising creatives may be selected for placement in content services, such as streams, based on a match between the advertiser categorization or taxonomy associated with the preexisting creatives used for the transformed creatives and a categorization or taxonomy of user profile information. The use of user profile taxonomies for behavioral targeting has been disclosed in U.S. Patent No. 7,904,448 to Chung et al., titled Incremental Update of Long-term and Short-term User Profile Scores in a Behavioral Targeting System.

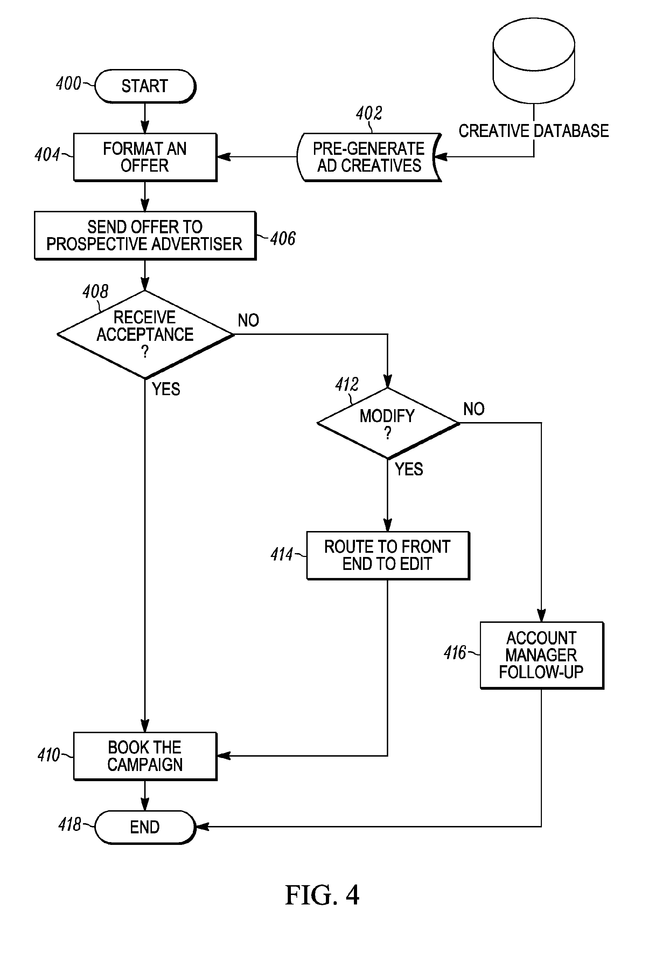

FIG. 4 is a flow diagram illustrating an example embodiment of a method for onboarding an advertiser to a new advertising campaign. The method may be performed by any suitable data processing system or combination of data processing elements such as those illustrated and described generally in conjunction with FIG. 1. The method begins at block 400.

At block 402, advertising creatives are pre-generated. The operation of block 402 may be performed by any suitable device such as the transformation engine 112 of FIG. 1. In this example, the source of ad creatives is a creative database which stores a wide variety of advertising creatives. For example, the creative database may store substantially all or a portion of the advertising creatives of the advertiser. In addition the creative database may store substantially all or a portion of the advertising creatives of many advertisers. In another example, the operation of block 402 may operate on advertising creatives of an advertiser prepared for other online systems. These creatives may be obtained by direct access to the advertiser's creative data on the other system, or these other creatives may be obtained by conventional means such as crawling internet sites to identify and retrieve the advertiser's advertising creatives.

The operation of block 402 operates to filter, format and generally transform advertising creatives that are pre-existing and have been developed other purposes and other campaigns into ads suitable for the current campaign. In one particular example, the advertising creatives are transformed into stream ads that may be placed in a stream on a user's device with other streamed content.

At block 404, an offer message is formatted. The offer message may be any suitable communication made electronically to the advertiser. Examples include an email message, a text or SMS message and a web page with pushed content. In one particular embodiment, an electronic mail message is formatted with text describing the offer and with graphics showing an example of the advertiser's stream ads placed in a stream with example stream content. In another particular example, the email message includes the display of the stream ads and stream content on a device of a particular type, such as a mobile web device 204, 304, a mobile application 206, 306 and a PC 208, 308 as illustrated in FIGs. 2 and 3. In a further particular example the email message includes display of the stream ads on all proposed types of devices.

The offer message is also formatted with an offer acceptance actuator. This may be any device such as text, graphics, hyperlink or other that may be actuated by the prospective advertiser to signal acceptance of the offer. In one example involving an email message, the email message includes a clickable button that is a hyperlink and is labeled Accept Offer, Start Campaign, or similar.

In some embodiments, the offer message may also be formatted with an offer modification actuator. The offer modification actuator may be labeled "Make Changes" or similar. The offer modification actuator may be actuated by the prospective advertiser to signal interest in the offer but a desire to make modifications.

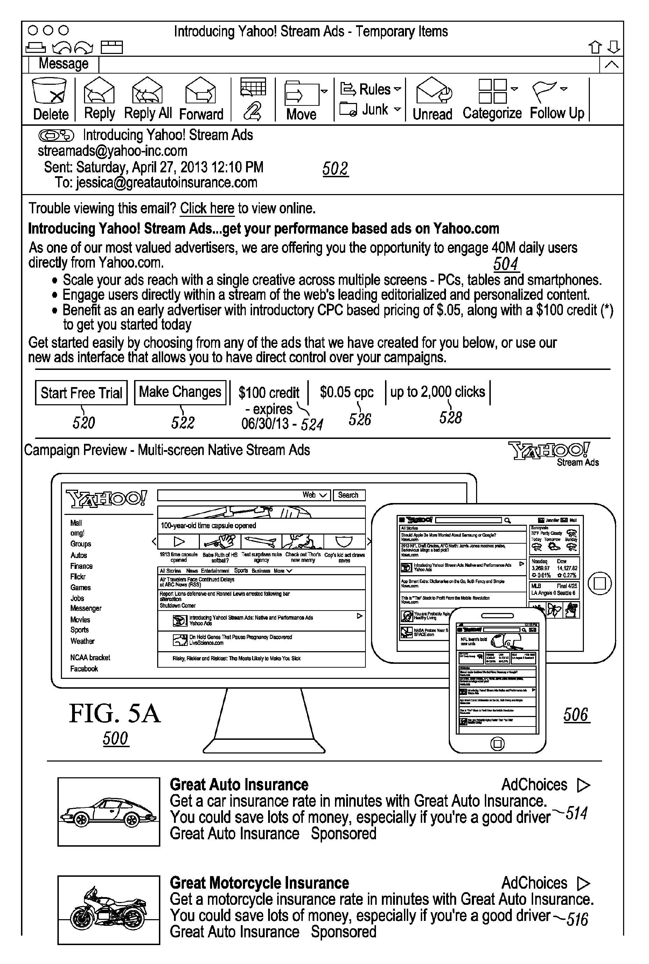

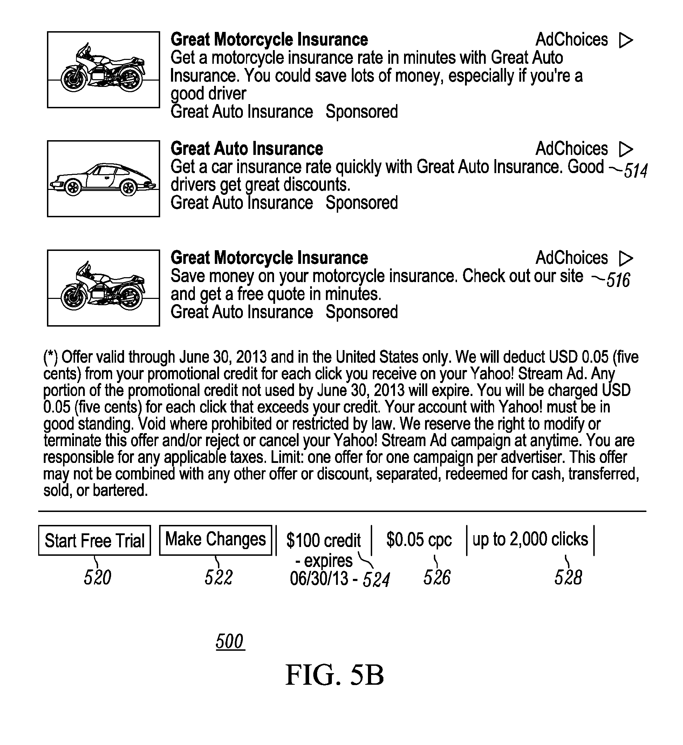

The operation of block 404 to format the message may be done by any suitable data processing device including the email server of FIG.1. An example email offer message is illustrated and describe below in conjunction with FIG. 5.

At block 406, the offer message is communicated to the prospective advertiser. Communication of the message may be done in any suitable fashion. For an email offer message, the email server may communicate an email message with the offer message contained therein. For a web based message, the offer message may be incorporated in a web page presented to the advertiser, either as pushed content or in response to a page request from the advertiser. Optionally, a legal confirmation of terms of service may be required here by the online provider before acceptance of the offer is communicated.

At block 408, it is determined if an offer acceptance message is received from the advertiser. Block 408 may involve delay operations and looping operations to accommodate real-time delays between communication of the offer message and receipt of a response. The advertiser may respond to the offer message by accepting the offer, asking to modify the offer or by declining the offer. A received offer acceptance message may be indicative of selection of the offer acceptance actuator by the advertiser to accept the offered advertising campaign.

If the offer acceptance message is received, at block 410, the proposed ad campaign is booked. For example, if the advertiser is new to the online information system, a new account may be opened for the advertiser and suitable accounting entries made in an account database. If the advertiser already advertises on the online information system, the advertiser's account may be updated to reflect the new campaign. New entries may be started in the account database. An advertising server may begin serving advertisements.

If no offer acceptance message is received at block 408, at block 412 it is determined if a request to modify the offer has been received. As noted above, the offer message may include an offer modification actuator be labeled "Make Changes" or similar. Selection of the offer modification actuator will communicate from the advertiser an offer modification message indicative of selection of the offer modification actuator.

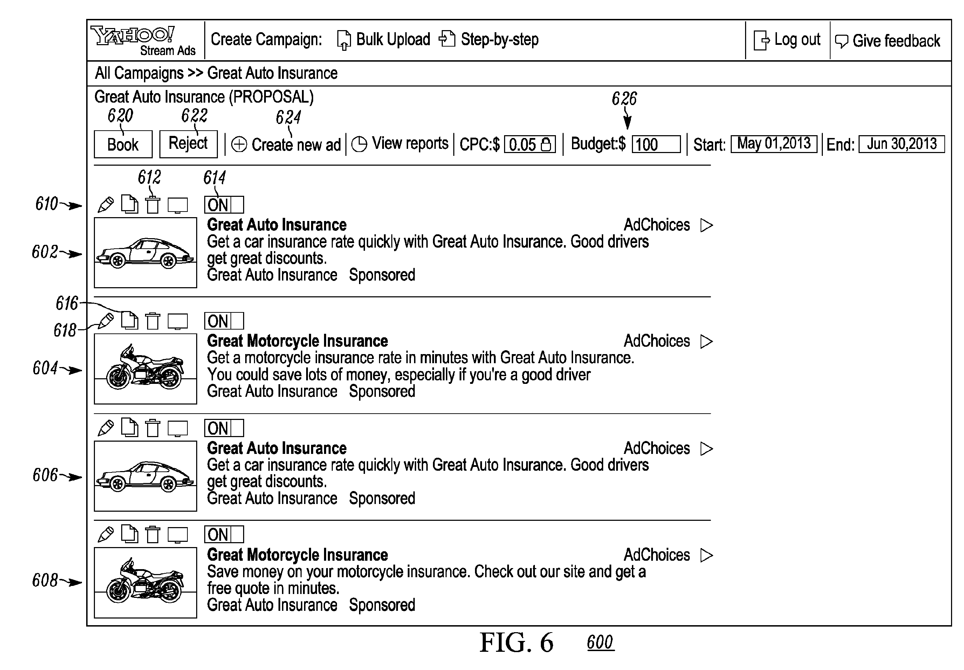

In response to receipt of the offer modification message, appropriate action will be taken to receive proposed modifications to the offer from the advertiser. For example, clicking the offer modification actuator will redirect the web browser of the advertiser's device to a web site of the online information system, block 414. This web site in one example provides interactive access to a front end of an advertising server operated by the online provider. By means of the front end, the advertiser may view and modify elements of the advertising campaign offer. An example web page illustrating the process will be described below in conjunction with FIG. 6. After receiving the advertiser's proposed modifications to the offer, the campaign may be booked.

In an alternative flow not illustrated in FIG. 4, the offer message may provide an option for the prospective advertiser to signal interest in the proposed offer if not yet acceptance of the offer. Instead of being routed to the front end of the advertising server, a separate contact may be made with the prospective advertiser. For example, an account manager may be signaled to get in touch with the prospective advertiser to discuss the offer and try to book the campaign. This contact may be by any suitable means, including a telephone call, a text message or an additional email message directly to the advertiser from the account manager or a real-time online chat session initiated by the account manager. In this example, further, after discussing the offer with the prospective advertiser, the account manager may access the advertising front end to edit the details of the proposed offer in according with the advertiser's requested modifications. The account manager may then submit the modified proposal and, at block 410, the campaign will be booked.

If no request to modify the campaign is received at block 412, at block 416, the account manager will follow up with the prospective advertiser. This contact may be in accordance with any of the account manager initiated interactions described above. The account manager may be able to book the campaign with or without modifications. The example method ends at block 418.

FIG.5A and FIG. 5B illustrate an example offer message 500 that may be communicated to a prospective advertiser offering an advertising campaign. The offer message 500 in this example is an email message. The offer message 500 includes an address field 502, an offer text field 504 and a mockup field 506.

The address field 502 includes addressing information for the offer message. In the embodiment of an email message, the addressing information includes a destination address, an origination address, a date of transmission, a message subject and other header information.

The offer text field 504 includes descriptive text to inform the advertiser who receives the offer message 500 about the offer. Details may be provided along with other contact options such as hyperlinks, telephone numbers, etc.

The mockup field 506 includes graphics and text showing the advertiser an example appearance of advertisements placed on a display device with example content. This provides the advertiser with a campaign preview to see how the advertiser's advertisements will look in context with content. In the illustrated example, the advertisements are stream ads and the context of the stream ads is a stream of content displayed on a display device. Further in the illustrated example, the advertisements are shown in context on multiple devices, including a PC display 508, a mobile application such as a tablet computer 510 and a handheld mobile device such as a smartphone 512.

As shown in FIG. 5A, the offer message further includes at least one advertisement 514, 516. The advertisements are shown with advertising creatives as the advertisements will appear when the campaign goes live. The advertising creatives in the advertisements 514, 516 are developed by transforming pre-existing ad creatives from other advertising campaigns of the advertiser or from other sources.

FIG. 5B shows a lower portion of the offer message 500. The offer message 500 may be displayed on a device of the advertiser, such as a PC display screen or the screen of a mobile device such as a tablet computer or smartphone. The offer message 500 includes stream ads 514, 516. The stream ads are placed in context with a stream of information and with an appearance to match the context of the stream and the stream ads. The stream ads have a generally common size, shape, color, text font and size and information presentation to match the context of the stream.

The offer message 500 further includes an offer accept button 520, a change request button 522, a budget indicator 524, a cost per click indicator 526 and a click counter indicator 528. The accept button 520 is a user selectable hyperlink that may be clicked by a user, for example using a mouse or pointer or a touch on a touch screen. The accept button 520 operates as an initiation actuator selectable by the advertiser to accept the offer for the advertising campaign. Upon actuation by the advertiser, an offer acceptance message is communicated from the advertiser device to an advertising server, for example. In response to receipt of the offer acceptance message, the online information system books the campaign.

The change request button 522 operates as an offer modification actuator selectable by the advertiser to propose a counteroffer for the advertising campaign. After review of the offer defined by the offer message 500, the advertiser may be sufficiently interested to continue to investigate the offer. Moreover, the advertiser may identify modifications to the offer. Accordingly, the advertiser may select the change request button 522. Actuation of the change request button 522 causes communication of an offer modification message indicative of selection of the offer modification actuator. Receipt of the offer modification message produces a response by the online information system. Also, actuation of the change request button 522 may cause the browser of the device on which the offer message 500 is viewed to be redirected to a web site that offers secure editing access to the offer by the advertiser.

The budget indicator 524 shows the money amount proposed to be set as a maximum spending amount for the proposed advertising campaign. In the illustrated example of FIG. 5B, the budget is pre-set to $1,000. This money amount is one aspect of the offer to the advertiser. The cost per click indicator 526 shows the money amount proposed to be charged to an advertiser for each click through recorded against the advertiser's ads. This money amount is one aspect of the offer to the advertiser. The click counter indicator 528 provides an indication of the number of clicks that the advertiser may receive at the set budget amount and the set cost per click amount.

The money amounts of the budget indicator 524 and the cost per click indicator 526 form pricing information for the advertising campaign. The pricing information establishes economic value to be exchanged between the online service provider and the advertiser who receives the offer message. In the illustrated example, the pricing information is shown as currency values. Such currency values may be exchanged between the advertiser and the online service provider and the online service provider may maintain an account for the advertiser with an ongoing account balance against which payments from the advertiser may be drawn. The advertiser may replenish the account when appropriate and in any convenient manner. The online service provider may also provide credits to the account of the advertiser, for example as inducements to try new products. The credits also form pricing information for the advertising campaign. Instead of the offer message including the budget indicator 524 and the cost per click indicator 526 as shown in FIG. 5B, the offer message may indicate that some credit value will be added to the account of the advertiser, or that the pricing information for the campaign includes some currency value, some credit value or any other economic value, alone or in combination.

Moreover, in the example of FIG. 5B, the pricing information is static. That is, the pricing information is a fixed cost per click for all advertising creatives and for the campaign. The online service provider may choose to offer static pricing information for any convenient reason, including to simplify the offer for a prospective advertiser to encourage engagement with a new product and onboarding by the advertiser.

In other examples, dynamic pricing information may be used and offered. For example, the pricing information may be set differently for different advertisers and for different pre-generated campaigns for the same advertiser. The different pricing information may be set, for example, based on the type of advertising creatives and the placement of the advertising creatives. Also, the dynamic pricing information may change over time, for example, to offer a discount to an advertiser or to offer premium pricing under specified circumstances. During one campaign time in the near future, one price point may be offered by the online service provider. During a second campaign time in the more remote future, a second price point may be offered by the online service provider. Further, different price points may be offered for differing campaign durations, with a higher price point for a short-term campaign and a lower, discounted price point for a longer-term campaign.

Still further, the dynamic pricing information may change based on the channel by which the offer is made to the advertiser. For example, one price point may be specified if the offer is made through an email message and another price point may be specified if the offer is made through a web page presented to the advertiser.

In other examples, dynamic pricing information may be based on guaranteed delivery advertising. With guaranteed delivery, advertisers may pay based at least in part on an agreement guaranteeing or providing some measure of assurance that the advertiser will receive a certain agreed upon amount of suitable advertising. Dynamic pricing information may alternatively be based on non-guaranteed delivery advertising, which may include individual serving opportunities or spot market(s), for example. In various embodiments, advertisers may pay based at least in part on any of various metrics associated with advertisement delivery or performance, or associated with measurement or approximation of particular advertiser goal(s). For example, embodiments may include, among other things, payment based at least in part on cost per impression or number of impressions, cost per click or number of clicks, cost per action for some specified action(s), cost per conversion or purchase, or cost based at least in part on some combination of metrics, which may include online or offline metrics, for example.

Further, the cost of new campaign to an advertiser may be presented in a proposal to the advertiser as an optional add-on to existing campaigns currently in place for the advertiser. Still further, new advertising campaigns for different content services and platforms may be bundled together and offered to the advertiser at a single price which is lower than the total cost to the advertiser had each new campaign been purchased separately by the advertiser. The online service provider may tailor pricing of the proposed advertising campaign based on particular business experience with the prospective advertiser, goals of the online service provider and prospective advertiser, as well as advertising products offered by the online provider that may be used by the prospective advertiser.

Thus, with dynamic pricing, pricing information may be selected by the online service provider for a specified advertising campaign, for a particular advertiser and for a particular campaign duration or campaign time. The selected pricing information may then be offered to the prospective advertiser to best suit the requirements of the prospective advertiser.

FIG. 6 illustrates an example web page 600 useable by an advertiser for modifying a proposed advertising campaign. The web page 600 may be generated by any suitable data processing system such as the advertising server or the account server of the online information system of FIG. 1. The web page 600 may be displayed on a user device operated by a prospective advertiser. In accordance with one embodiment, the online information system communicates an advertising campaign offer message to the user device of the advertiser. The offer message includes an offer acceptance actuator such as a hyperlink or display item labeled "accept offer" or similar. The offer message also includes an offer modification actuator labeled "make changes" or similar. Upon actuation of the offer modification actuator, for example by clicking the hyperlink, a web browser of the advertiser's user device is redirected to the web page 600. The advertiser is then given the opportunity to interactively modify the proposed advertising campaign.

In one embodiment, the web page 600 is generated by a front end portion of a server such as the account server. The front end portion provides interaction with networked devices such as the user device of the advertiser. A copy of the data that forms the proposed campaign may be copied to the front end portion for display and editing by the advertiser. The copied data may be used to form the web page 600 by the front end portion. Edits to the web page are then reflected in the copied data by the front end portion of the account server. When edits are complete, the data may be stored elsewhere on the online information system, such as in the ad database or the account database.

The web page 600 displays several proposed advertising creatives 602, 604, 606, 608. Each creative has been automatically generated, in one embodiment, from other existing advertising creative of the advertiser. Each respective creative is displayed with a set of editing tools 610. In one example the editing tools includes a delete creative tool 612, a creative status switch 614, a creative copy selector 616 and an edit creative selector 618. The delete creative tool 612 may be actuated by the advertiser, for example by clicking the delete creative tool 612 with a mouse or on a touch screen, to delete the proposed creative from the proposed campaign. The creative status switch 614 may be actuated to turn on or turn off the respective creative from the campaign. If the respective creative is turned off, ads with that creative will be suppressed but remain in the campaign and may be turned on later. The creative copy selector 616 may be used to copy the respective content to create a new ad with the same creative that may be further edited. The edit creative selector 618 may be actuated to edit the content of the respective creative.

The web page 600 further includes campaign editing controls. In the example of FIG. 6, the web page 600 includes a book campaign button 620, a reject campaign button 622, a create new ad button 624 and a campaign summary view 626. Other embodiments may include additional, fewer or alternative controls. Also, the displayed controls may vary dynamically depending on the current activity by the advertiser with the web page 600.

The book campaign button 620 may be used by the advertiser to signal that the editing process is completed and that he desires to book the campaign. For example, actuation of the book campaign button 620 on the web page 600 by the advertiser may operate to cause a server system such as the account server or ad server to save the current campaign data represented by the web page in a database for subsequent use during the campaign and to update account information for the advertiser in an account database.

The reject proposal button 622 may be used by the advertiser to decline the offered advertising campaign. Actuation of the reject proposal button 622 may cause the server system to initiate a separate contact with the advertiser to follow up on the reasons for the rejection. This contact may be electronic, such as an email from an account manager, or may be personal such as a telephone call from the account manager.

The create new ad button 624 causes the server system with which the advertiser is interacting to serve a new web page with data entry fields for creating a new advertisement. The data entry fields in one embodiment match the format of the fields of the respective creatives 602, 604, 606, 608 so that the advertiser creates a new stream ad which automatically fits in as a part of the proposed campaign.

The campaign summary view 626 includes a display of data about various items of interest to the advertiser about the campaign. The illustrated example includes a current cost-per-click amount indicator, a campaign budget indicator, a start date indicator and a campaign end date indicator. In this example, each of these illustrated indicators is also an actuator that may be selected to change the data represented by the indicator. For example, actuating the campaign start date indicator may call up a calendar which can then be used to select a new date when the proposed campaign will begin. The campaign summary view 626 may include other or additional or fewer indicators or selectors than those shown in FIG. 6.

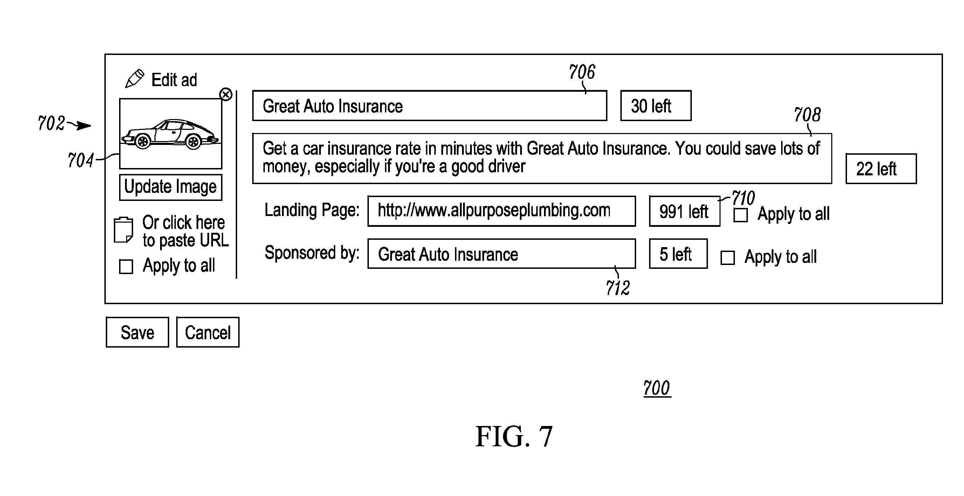

FIG. 7 illustrates a second example web page 700 useable by an advertiser for modifying a proposed advertising campaign. The web page 700 is produced by a server system for display on a user device of an advertiser who is modifying a proposed advertising campaign. The web page 700 may be generated by the server system following actuation of an edit creative selector 618 of a respective advertisement of the ads or ad creatives displayed on the web page 600 of FIG. 6.

Actuating the edit creative selector 618 for a respective ad causes the web page 700 to display an ad creative view 702. The ad creative view 702 includes one or more data fields for editing advertising creative by an advertiser on a user device operated by the advertiser. In this example, the ad creative view 702 includes several fields for modifying portions of the ad creative. The example fields include a graphics field 704, a title field 706, a description field 708, a landing page field 710 and a sponsor field 713. Each field may be independently edited. Initially, each field is populated with data for the proposed ad creative. In one example, the data for the proposed ad creative is obtained by transforming pre-existing advertising creatives of the advertiser into the format of the proposed creative.

The graphics field 704 includes an image or other graphical element that is displayed with the advertisement. The graphics field 704 may be selected by the advertiser viewing the web page 700 on a user device and edited in appearance or by deleting the image in the graphics field 704 or by substituting a different image.

The title field 706 displays the title given to the ad being edited. The advertiser may select the text displayed in the title filed and change or rewrite the text as desired. The description field 708 displays a textual description of the goods or services being offered by the advertisement. The landing page field 710 displays the URL to which a web browser will be redirected upon selection of the respective ad by a viewer when the ad campaign is active and the respective ad is displayed to the viewer. The sponsor field 713 displays the advertiser or other information defining an organization or individual responsible for the respective advertisement. Any of the fields in the ad creative view 702 may be edited by the advertiser for each respective ad displayed on the web page 700.

The web page 700 further includes campaign editing controls such as those described above in conjunction with the example of FIG. 6. In the illustrated example, the web page 700 includes a book campaign button 620. Following editing of respective advertisements by the advertiser, the book campaign button 620 may be actuated by the advertiser. Clicking the book campaign button 620 causes the web page 700 to be communicated to the server. The server in turn operates to book the campaign and begin further processing of the campaign.

In some embodiments, the book campaign button 620 thus operates as an offer acceptance actuator which is selectable by the advertiser to accept the offer. In the example of FIG. 7, the accepted offer is the proposed offer as modified by the advertiser. In the example of FIG. 5B, the offer accept button 520 operates in the same manner. In some embodiments, selection of an offer acceptance actuator in a communication such as an email message operates to immediately book the advertising campaign. This immediate operation provides a high degree of simplicity and convenience for the prospective advertiser. The process of onboarding the prospective advertiser is reduced to a single click. After the advertiser views the proposed campaign in the email or other communication from a server system, the advertiser can simply click the displayed button and a communication is returned to the server accepting the offer and booking the campaign.

In some embodiments, before actual booking of the campaign occurs, a second web page or other actuator is displayed to the advertiser. The second page may operate as a confirmation page for the acceptance. For example, the advertiser may have inadvertently clicked a "book campaign" button and may not actually desire to do so. A confirmation page offers the advertiser to correct the error. In another example, the confirmation page may display terms and conditions of the online provider. These terms and conditions are offered to the advertiser who must signal his assent to the terms and conditions by clicking an agreement selector. In yet another example, the confirmation page may show the advertiser information that requires advertiser input, such as changing or confirming simple parameters about that campaign. Examples would be any combination of the advertising campaign budget, targeting and tracking parameters. Requiring input in this manner serves to obtain clear assent by the advertiser to the terms of the offered campaign as well as to ensure that only a human, not an automated process, is accepting the offered campaign and creating a financial liability for the advertiser. Only after receiving the click on the agreement selector or other affirmative advertiser input is the offer acceptance communicated to the server system for booking of the campaign.

In some embodiments, additional campaigns may be offered to an advertiser who is already using the product. When the product is new, or at least new to the prospective advertiser, the system, products and method described herein are particularly useful for simplifying and accelerating the onboarding process. If an advertiser has an existing account with the online information system, onboarding can be reduced to a single click on an offer message.

However, the same benefits of efficiency and time savings apply when the advertiser has an existing campaign underway with the product. An offer message may be formatted with pre-generated advertising creative information, pricing information and an initiation actuator. Because of the online information system's experience with the advertiser's use of the product, the offer may be better tailored to the particular advertiser. For example, the pricing information in the offer may be based on past experience with the advertiser and the advertiser's products. Also, because of the advertiser's experience with the product, the advertiser may be even more comfortable immediately accepting the offer and thereby automatically booking the campaign.

While various embodiments and examples have been described herein with respect to an advertiser, it is to be understood that other individuals or entities may be acting in the place of an advertiser. For example, some businesses and other organizations engage advertising consultants, advertising agencies, search engine optimizers or other third parties to manage online advertising efforts. When the term "advertiser" is used herein, it is to be understood that this term is to apply equally to any third party acting in the place of an actual prospective advertiser or on behalf of an actual prospective advertiser. Information sent to a third party in connection with an advertiser's account or advertisements, or information received from a third party in connection with the advertiser's account or advertisements, may be considered as going to or coming from the advertiser.

In some embodiments described above, the online provider introduces a new advertising product and reaches out to a prospective advertiser by sending a communication such as an email message offering terms for a new advertising campaign using the new product. In another embodiment, the online provider may introduce the new product and offer the campaign in a similar manner to existing advertisers who use other advertising products. For example, some products offer a user interface by which an existing advertiser can monitor the progress and status of the advertising campaign. The online provider may choose to offer the new product through the user interface when the existing advertiser views the user interface. Instead of an email message sent to the advertiser, a message may be created and passed through the user interface. The message may include the same or similar content as the emails and other communications outlined above but in a different format for an existing advertiser accessing his account information.

The disclosed method and system may be implemented partly in a server, a client device, a cloud computing environment, partially in a server and partially in a client device, or a combination of the server, the cloud computing environment and the client device.

It is intended that the foregoing detailed description be regarded as illustrative rather than limiting, and that it be understood that the detailed description should not be used to limit the scope of the invention.

## Claims

1. A method comprising:
in a server system,
selecting advertising creatives from a database (114) of advertising creatives;
formatting an offer message (500) with
the selected advertising creatives,
an offer for an advertising campaign from an online service provider to an advertiser, and
an offer acceptance actuator (520);
communicating the message from a server system to a device (124) of an advertiser,
receiving an offer acceptance message indicative of selection of the offer acceptance actuator by the advertiser; and
booking the advertising campaign.

2. The method of claim 1 wherein formatting the offer message (500) further comprises including in the offer message an offer modification actuator (522) and further comprising receiving an offer modification message indicative of selection of the offer modification actuator.

3. The method of claim 2 further comprising:
in the server system,
in response to receipt of the offer modification actuation message, opening a web page (600, 700) on the device of the advertiser; the web page displaying modifiable elements of the offer for the advertising campaign on the web page;
receiving data defining advertiser interaction with the web page to modify advertiser-selected elements of the offer for the advertising campaign;
receiving a modified offer acceptance message indicative of acceptance of the advertising campaign with the modified elements; and
booking the advertising campaign.

4. The method of any of claims 1 to 3 further comprising:
in the server system,
in response to receipt of the offer acceptance message, communicating a web page to the advertiser, the web page including a terms acceptance actuator;
prompting the advertiser to select the terms acceptance actuator; and
receiving a terms acceptance message indicated of selection of the terms acceptance actuator.

5. The method of any of claims 1 to 4 wherein communicating the message comprises transmitting an electronic mail message to the device of the advertiser:

6. The method of any of claims 1 to 5 wherein booking the advertising campaign comprises:
populating an advertisement database with advertisements including the selected advertising creatives;
updating account of the advertiser on an account management server with details of the offer for the advertising campaign; and
serving the advertisements to users.

7. A computer-readable medium comprising computer-readable instructions to implement the method of any preceding claim.

8. A system comprising:
a storage device (114) to store data defining a plurality of pre-generated advertising creatives; and
a server system (116) in data communication with the storage device (114) and configured to communicate a communication (500) to a data processing device of an advertiser over a network, the communication including
data defining one or more selected pre-generated advertising creatives,
an offer to the advertiser of an online advertising campaign, and
an offer acceptance actuator (520) which is selectable by the advertiser upon receipt of the communication at the data processing device of the advertiser to accept the offer.

9. The system of claim 8 further comprising
an advertising creative database (114) configured to store data defining a plurality of advertising creatives;
a transformation engine in data communication with the advertising creative database and operative to modify a selected advertising creative from an original creative format to an offer creative format for inclusion in the communication as a pre-generated advertising creative.

10. The system of claim 9
wherein the transformation engine is further operative to modify the selected advertising creative to form the selected pre-generated advertising creative to visually accord with content items displayed in the communication with the selected pre-generated advertising creative; and/or
wherein the transformation engine is further operative to modify the selected advertising creative for visual conformity with content items displayed in the communication with the selected pre-generated advertising creative and in association with at least a computing device and one or more mobile computing devices.

11. The system of any of claims 7 to 10
wherein the server system comprises an email server (116) configured to format an electronic mail message addressed to the advertiser, the electronic mail message including:
example content for display to a user of a web site; and
the one or more selected pre-generated advertising creatives formatted for streaming display with the example content;
optionally wherein the email server (116) is configured to format the electronic mail message with the example content in association with the one or more selected pre-generated advertising creatives and displayed as proposed to appear on at least a desktop computing device and a mobile computing device;
optionally further comprising:
a transformation engine in data communication with the storage device and the email server and operative to modify the one or more selected advertising creatives to conform to the example content on each device of the desktop computing device and the mobile computing device.

12. A product (500) comprising:
an offer for an advertising campaign from an online service provider to an advertiser;
pre-generated advertising creative information for the advertising campaign;
pricing information for the advertising campaign; and
an initiation actuator (520) selectable by the advertiser to accept the offer for the advertising campaign.

13. The product (500) of claim 12 further comprising:
return data from the advertiser to the online service provider indicating a response to selection of the initiation actuator by the advertiser; and
booking data indicating booking of the advertising campaign with the online service provider in response to selection of the initiation actuator by the advertiser.

14. The product (500) of claim 12 or claim 13 wherein the pre-generated advertising creative information comprises one or more stream advertisements adapted to visually conform to the content to be delivered to the user.

15. The product (500) of any of claims to 12 to 14 further comprising:
context information illustrating content to be delivered to a user with the pre-generated advertising creative information;
optionally wherein the context information comprises content adapted for display on a selected type of user device;
further optionally wherein the context information comprises:
content adapted for display on a laptop computer display, a desktop computer display or a mobile device display, and
wherein the pre-generated advertising creative information is similarly adapted for display in context with the adapted content.

16. The product (500) of any of claims 12 to 15 further comprising an offer modification actuator selectable by the advertiser;
optionally further comprising data to re-direct a browser of a user device receiving the offer to a web site of the online service provider to view and modify terms of the offer for the advertising campaign by an advertiser using the user device.

17. The product (500) of any of claims 12 to 16 further comprising:
data defining an electronic mail message for communication from an originating device to the advertiser over a network to a data processing device of the advertiser for receipt by the advertiser, viewing by the advertiser and subsequent action on the offer by the advertiser.

18. The product (500) of any of claims 12 to 17 wherein the pricing information for the advertising campaign comprises pricing information selected by the online service provider for a specified advertising campaign and for the advertiser and for a particular campaign time.
